# EUROPEAN PATENT APPLICATION

(11) **EP 1 184 961 A1**
(43) Date of publication of application: **06.03.2002**
(21) Application number: 00402330.5
(22) Date of filing: 21.08.2000
(51) Int. Cl.: H02M 1/12

(54) **Apparatus and method for reducing noise in a switch mode power management system**

(71) Applicant: MOTOROLA, INC., Schaumburg, IL 60196 (US)
(72) Inventor: Verdier, Jean-Baptiste Pierre, 31470 Saint-Lys (FR); Fourtet, Christophe, 82170 Pompignan (FR); Tico, Olivier, 31170 Tournefeuille (FR)
(74) Representative: Joly, Jean-Jacques

(57) **Abstract**

A digitally controlled frequency clock system (18) is used to reduce noise in a switched mode power supply (16). Controlled frequency clock system (18) provides a clocked signal having a frequency Fᵢₙ spread over a predetermined frequency band (Δf) that has the effect of spreading spurious sideband noise over the predetermined frequency band. The peak amplitude of the spurious noise signals is reduced. This solution reduces the noise by eliminating the source of the noise rather than using the shielding and filtering techniques of the past.

## Description

### BACKGROUND OF THE DISCLOSURE

Many radio systems are particularly sensitive to electro magnetic interference (EMI). Switched mode power converters are typically used in radio systems to convert a voltage supplied by the battery to a regulated output voltage. A switched mode power supply can radiate EMI that will adversely affect the operation of noise sensitive circuits of the battery-operated system. In addition, the DC regulated output of the switched mode power converter may contain an unwanted noise component caused by the switching operation of the circuit.

There are several techniques used to avoid spurious noise in a transmitted signal. One of the most commonly used techniques is to shield the noise sensitive part of the system, or to shield the switched mode power converter or the part of the system that generates or radiates noise. The shielding technique should be used with appropriate filtering to eliminate both the radiated EMI and noise on the regulated output of the power converter.

There are several drawbacks related to shielding and filtering. For example, they may be costly to implement, they require a large amount of space in the system, they need additional components, and additional development effort and time are required. In addition to filtering the output of the DC converter the battery line should be filtered as well to eliminate the possibility of spurious battery voltages affecting the operation of other subsystems of the system.

Another way to reduce noise in the switched mode power converter output signal is to control the rise and fall time of the switching signals. This can be a low cost solution, but will be highly process dependent. In addition, the speed and frequency performance of the system may decrease as a result controlling the rise and fall times. Another possible solution to the noise problem is to use delta-sigma modulated switching. Delta-sigma modulators can effectively remove or decrease the EMI, however, they may be very complex and expensive to implement.

Therefore, a need exists for a switched mode power converter having reduced radiated EMI and a less noisy regulated output that is low cost, space efficient, and relatively simple.

### BRIEF DESCRIPTION OF THE DRAWINGS

Embodiments of the invention will now be more fully described, by way of example, with reference to the drawings, of which:
FIG. 1 illustrates a diagram of amplitude versus frequency for an RF signal with generated side-band noise.
FIG. 2 illustrates a diagram of amplitude versus frequency of an RF signal and frequency spreaded side-band noise using the circuit in accordance with the present invention.
FIG. 3 illustrates, in block diagram form, a battery powered system in accordance with an embodiment of the present invention.

### DETAILED DESCRIPTION

Generally, embodiments of the present invention provide a circuit technique for reducing noise in switched mode power supplies. A digitally controlled frequency clock system is used to provide a pseudo randomly generated frequency Fᵢₙ, that has the effect of spreading spurious sideband noise over a predetermined frequency range, thus reducing the peak amplitude of the spurious noise signals. This solution reduces noise by eliminating the source of the noise rather than shielding and filtering the noise generating and noise sensitive components as done in the past.

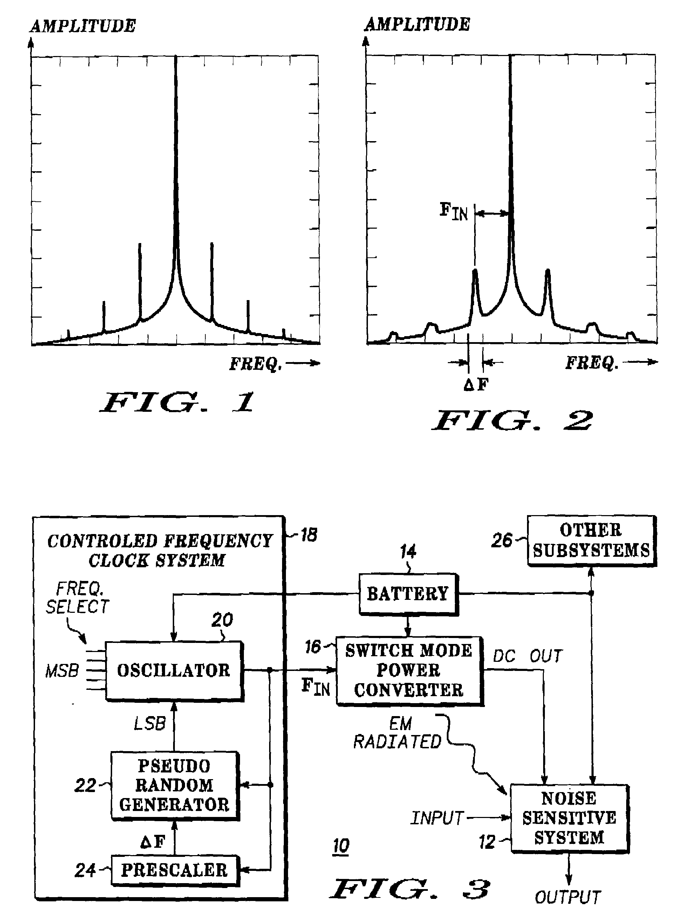

FIG 1 illustrates a diagram of amplitude versus frequency of an RF signal having spurious sideband noise. The RF signal is shown in the centre of the diagram and spurious first order sideband noise is shown immediately adjacent to the RF signal. Second and third order noise can also be seen in FIG.1. A noisy system can cause many problems. One problem with spurious sideband noise in a modern cellular telephone system is that the spurious noise can overlap into adjacent channels causing undesirable interference.

FIG. 2 illustrates a diagram of amplitude versus frequency of an RF signal where the sideband noise is spread over a predetermined frequency using a controlled frequency clock system 18 (FIG. 3) in accordance with the present invention. By spreading the sideband noise over a predetermined frequency band labelled "ΔF", as illustrated in FIG. 2, the peak amplitude of the sideband noise is reduced, while the total energy remains the same. Also, note that in FIG. 2, the sideband noise is displaced from the centre frequency of the RF signal by frequency Fᵢₙ and its harmonics.

FIG.3 illustrates a battery-powered system 10 in accordance with one embodiment of the present invention. System 10 includes a noise sensitive sub-system 12, a battery 14, a switched mode power converter 16, and a digitally controlled frequency clock system 18. Digitally controlled frequency clock system 18 includes oscillator 20, pseudo random number generator 22, and prescalar 24.

In the illustrated embodiment, switched mode power converter 16 converts a voltage from battery 14 to a regulated output voltage. The regulated output voltage is used to supply various subsystems of system 10. As shown in FIG. 3, some of those subsystems may be sensitive to both radiated EMI and to transmitted noise conducted from the switched mode power converter. Noise sensitive system 12 may be any one of several circuit types. For example, noise sensitive system 12 could be a radio frequency (RF) transmitter, a power amplifier, or some other type of amplifier. Also noise sensitive system 12 could be an audio circuit or a voltage control oscillator (VCO).

Switched mode power converter 16 has a first input for receiving frequency Fᵢₙ, a second input for receiving a power supply voltage from battery 14, and an output for providing a DC regulated output voltage labelled "DC REGULATED OUTPUT". Noise sensitive system 12 may have an input for receiving a signal labelled "INPUT SIGNAL" and an output for providing a signal labelled "OUTPUT SIGNAL". The DC regulated output is used to supply a power supply voltage to noise sensitive system 12. In addition, battery 14 may also supply a power supply voltage to noise sensitive system 12, or the other subsystems of system 10. Digitally controlled frequency clock system 18 has an input for receiving a power supply voltage from battery 14, and an output for providing frequency Fᵢₙ. Oscillator 20 has a plurality of inputs for receiving control signals labelled "FREQUENCY SELECTOR", and an output for providing frequency Fᵢₙ. A most significant bit of the frequency selector signals is labelled "MSB". Pseudo random number generator 22 has an input for receiving frequency Fᵢₙ and an output for providing a least significant bit, labelled "LSB", of the frequency selector control signals to oscillator 20. Prescalar 24 also receives frequency Fᵢₙ, and an output for providing signal ΔF to an input of pseudo random number generator 22.

In operation, oscillator 20 provides the frequency Fᵢₙ based on values of the frequency selector control signals. In the illustrated embodiment, only one bit, the LSB, of the frequency selector signals is provided from the pseudo random generator 22 to allow frequency spreading of the sideband noise between two frequencies. In other embodiments, more than one bit of the frequency selector control signals can be provided to oscillator 20 depending on the number of frequencies desired to be output. For example, using two or more frequency selector signals will allow frequency hopping, or spreading, between four or more frequencies to provide the ability to spread and to shape the noise. Based on the output of pseudo random number generator 22, oscillator 20 provides a frequency that can instantaneously change by an amount determined by the value supplied by prescalar 24. Oscillator 20 is preferably a digitally controlled oscillator. By changing the value of the frequency supplied to switched mode power converter 16, the sideband noise is spread over the frequency band determined by ΔF, thus lowering its peak amplitude as illustrated above in FIG. 2.

In the illustrated embodiment, a battery 14 supplies the power for system 10. However, in other embodiments battery 14 may be replaced by any type of power supply. Also note that switched mode power converter 16 may be any type of power converter that is not sensitive to a changing switching frequency. Pseudo random number generator 22 may comprise any kind of logic desired to create a spreading of the sideband noise. In other embodiments, generator 22 may include logic and/or an algorithm to generate a predetermined frequency spreading sequence instead of a pseudo random sequence.

Prescalar 24 is used to determine the width of the frequency band over which the sideband noise is spread. In the illustrated embodiment, the value of m = 10 in FIG. 3 is used, where m is the rank of the divider used in prescalar 24.

Most of the actual low voltage hand portable phones are using a Gallium Arsenide (GaAs) power amplifier because it provides a good compromise between cost, linearity, and efficiency. A major draw back of GaAs MESFET technology is the need for a negative bias voltage to be applied to each gate of the depletion transistors involved in the RF section. Each power amplifier stage is very sensitive to noise at their gates and usually a strong filtering structure is needed. Because the negative voltage is generated from a switching signal through a power converter, (a single diode can be used in place of switched mode power converter 16), the result is the generation of parasitic spurious noise located at the RF frequency plus or minus the switching signal frequency. Controlling the power converter using digitally controlled frequency clock system 18 can significantly reduce the peak level of spurious noise.

With the new trend in cellular technology being multi band/multi mode systems several RF voltage controlled oscillators are needed to operate in wideband technologies. For example, to maintain phase noise performance, a high voltage is required to operate the varactor. This high voltage will be provided by a switched step-up converter from a low voltage battery. Knowing that the VCO is an extremely sensitive device, substantial spurious noise may be created. Employing the noise spreading technique in accordance with the present invention can be a very efficient way to solve this issue. The noise spreading technique can be used to generate a high voltage for wideband tracking filters, wideband loadline switching, and wide band power amplifiers.

The noise spreading technique of the present invention reduces a peak amplitude of the spurious noise at the source of the noise. Also, the noise reduction can be achieved at lower cost and with less circuit board space than previous filtering, shielding, and noise shaping techniques. In addition, switching noise on the battery supply lines is reduced. Further, the noise spreading technique is not process dependent because it is digitally control.

Also, by reducing the radiated and generated noise of the switched mode power supply, a system may be fully integratable.

## Claims

1. An apparatus for reducing and controlling spurious noise to a noise sensitive system (12) in a power supply system (10) comprising:
a power supply (14) for providing operating power in the power supply system;
a power converter (16) for providing a regulated output signal to the noise sensitive system;
a controlled frequency clock system (18) for generating and controlling the frequency (Fᵢₙ) of an input signal provided to the power converter, wherein the spurious noise is spread across a predetermined frequency range of the input signal for reducing a peak amplitude of spurious noise.

2. The apparatus of claim 1 wherein the controlled frequency clock system (18) further comprises an oscillator (20) receiving a frequency selector control signal for generating and providing the input signal with frequency (Fᵢₙ) to the power converter (16).

3. The apparatus of claim 2 wherein the oscillator (20) is a digital current control oscillator.

4. The apparatus of claims 2 or 3 wherein the controlled frequency clock system (18) further comprises a predetermined sequence generator (22) to generate a signal to the oscillator (20) representative of a number of frequencies supplied to the power converter (16).

5. The apparatus of claim 4 wherein the controlled frequency clock system (18) further comprises a divider (24) for providing a signal (ΔF) to the predetermined sequence generator (22), wherein the signal (ΔF) is representative of the rank of dividing the predetermined range.

6. The apparatus of any preceding claim wherein the power supply system (10) further comprises a battery supply.

7. The apparatus of any preceding claim wherein the power converter (16) is a switch mode power converter.

8. The apparatus of any preceding claim wherein the spurious noise is noise conducted and radiated to the noise sensitive system (12) from the power converter system (14,16,18).

9. The apparatus of any preceding claim wherein the power supply system is a switch mode power supply system and the noise sensitive system is a voltage control oscillator.

10. A method for reducing and controlling spurious noise to a noise sensitive system in a power supply system, the method comprising the steps of:
providing operating power from a power supply in the power converter system;
providing a regulated output signal from a power converter to the noise sensitive system;
generating and controlling a frequency (Fᵢₙ) of an input signal provided to the power converter from a controlled frequency clock system, wherein the spurious noise is spread across a predetermined frequency range of the input signal for reducing a peak amplitude of spurious noise.
